# EUROPEAN PATENT APPLICATION

(11) **EP 3 378 327 A1**
(43) Date of publication of application: **26.09.2018**
(21) Application number: 16865329.3
(22) Date of filing: 16.11.2016
(51) Int. Cl.: A23K 40/25, A23K 10/30, A23K 50/10, A23K 50/20

(54) **METHOD FOR PRODUCING AN EXTRUDED FEED CONTAINING FIBRES**

(30) Priority: 18.11.2015 BR 102015288816
(71) Applicant: Neto, Alberto Samaia, 04530-050 Sao Paulo - SP (BR)
(72) Inventor: NASCIMENTO, Rodrigo Anselmo Pereira Do, CEP 38701-182 Patos de Minas - MG (BR); NETO, Alberto Samaia, CEP 38701-182 Patos de Minas - MG (BR)
(74) Representative: Gallego Jiménez, José Fernando
(86) International application number: PCT/BR2016/050297
(87) International publication number: WO 2017/083948

(57) **Abstract**

The present patent application refers to a process for obtaining extruded animal feed including fibers, especially sugar cane and corn straws, applied in the agricultural and cattle-raising field for the nutrition of ruminants, contributing for higher productive performance (meat or milk) than conventional animal feeds, making use of said non-used sources of fibers for that purpose, with extruded characteristics, as well as for equines, wherein the process follows exactly the same procedure as shown by the patent application, but without the mixture of urea and additives.

## Description

### Field of the invention

The present patent application refers to a process for obtaining extruded animal feed including fibers, especially sugar cane and corn haystacks, as applied in the agricultural and cattle-raising fields for the nutrition of ruminants and equines.

### Background

The use of fibers as wheat and corn straw in compositions and formulations of animal feed for ruminants is known in the state of the art. However, animal feeds known as using sugar cane and corn straw in their composition do not have an extruded origin.

As can be shown by the patent document BR 0621720-6, dated October 2, 2006, an animal feed composition for bovines or similar is disclosed, particularly animal feed for fattening, containing, besides conventional constituents, sorghum and straw, especially wheat straw, in substitution to corn, alfalfa and hay.

In opposition to the patent document as mentioned above, the invention as now claimed discloses a process for obtaining extruded animal feed, using, as fibers, sugar cane and corn haystack.

The extrusion process as used for obtaining animal feed, especially for ruminants, is also known in the state of the art, as can be proven by the North American patent documents US 5,540,932, dated April 13, 1995, and US 5,683,739, dated July 11, 1996, but it is important to highlight that the extrusion is not combined with materials such as haystacks. As known, extruded feed is a food which is processed under high temperature, pressure, dragging force and for a short period of time, followed by an abrupt change in pressure, making it become much more useful for animals.

Extrusion is very effective to improve the nutritional value of food of vegetal origin, since nutrients in them are found within cells involved by a layer of a low digestibility material (cellulose, hemicellulose, lignin), making the access of the digestive enzymes to them become difficult.

Therefore, with the object to reach an extruded feed which, besides energy, protein and minerals, also has a readily available source of fibers, based on haystack, preferably from sugar cane and corn, the present process has been developed.

By means of this process, it has been possible to reach animal feed for ruminants and equines having a productive performance (meat or milk) above conventional feeds, by making use of sources of fiber not used for that purpose.

### Object of the invention

The object of the present patent application is to disclose a process for obtaining extruded animal feed, including fibers, especially sugar cane and corn haystacks, for the nutrition of ruminants, contributing to higher production performance (meat or milk) than conventional feed, by making use of such sources of fiber which are not used for this purpose, with extruded characteristics, considering that extrusion is very effective to improve the nutritional value of food of vegetal origin, since nutrients are included therein inside the cell involved by a layer of a low digestibility material (cellulose, hemicellulose, lignin), making the access of digestive enzymes to them become difficult. Another object of the patent application at issue is a process for obtaining animal feed for equines, which process follows exactly the same procedure as shown by the patent application, but with no mixture of urea and additives.

### Detailed description of the invention

The present patent application discloses a process for obtaining extruded animal feed, including fibers, especially sugar cane and corn haystacks, for the nutrition of ruminants and equines.

The process for obtaining extruded animal feed comprises the following steps:

### - TREATMENT OF STRAW

Dry straw receives the application of an antifungal (active principle: ammonium dipropionate or similar) in the bundling process, under dose of 0.5 liters/ton of straw, by using a commercial product.

### - PRE-MILLING

Harvested and treated straw is chopped in a rotating drum chopper into 5-10 cm particles.

### - MILLING

The straw is milled in a rotating drum chopper with 4 knives, being reduced to average particles lower than 6 mm.

### - DOSAGE

The dosage of macro products is performed on scales, according to the proposed formulation.

The following macro products are used:
- corn and/or sorghum, 40-70% by weight;
- soy bran and/or sunflower bran and/or cotton bran, 1-4% by weight; and
- at least one source of fiber, which may be pre-chopped sugar cane straw or corn straw, 15-50% by weight.

### - WEIGHING

According to the proposed formulations, dosage is performed on scales with capacity for 1,000-2,000 kg; wherein the quantity of each product is controlled by the pre-defined weight.

### - MIXTURE

After weighing the macro products, these are delivered to a horizontal helical 3-stage mixer, into which the micro products are inserted, and the mixing process subsequently starts with a pre-set time of 1 to 5 minutes, depending on the formulation.

The following micro products are used for the nutrition of ruminants:
- urea for cattle raising, 0.01-3% by weight;
- potassium chloride for cattle raising;
- limestone;
- calcium sulfide;
- dicalcium phosphate;
- potassium;
- monensin;
- virginiamycin;
- yeast;
- white salt;
- molasses;
- powdered milk; and
- ready formulations: 0.2-6% by weight each.

For the nutrition of equines, no micro products are used.

### - MILLING:

After the mixture, the product passes through a hammer mill, with a 1.5-2.0 mm screen. This is the last milling step before the extrusion process.

### - EXTRUSION:

It consists of steam and pressure cooking the product after fine milling, wherein the product characteristics are changed after this procedure.

At the end of the extrusion process, according to each formulation and purpose of use, a grain size is established, and the following matrixes may be used:
- 6 mm diameter;
- 8 mm diameter; or
- 10 mm diameter.

### - DRYING:

After the extrusion process, the product is collected with humidity varying between 18 and 26%, and drying is required by using a steam (vertical or horizontal) drier. After drying, humidity will vary between 4% and 12%.

### - COOLING:

Despite the product leaves the drier under ideal humidity for storage, its temperature is above the room temperature, and cooling is required before the bagging process, so to avoid product transpiration inside the bags, which would form a favorable environment for fungus development.

Said cooling is performed by using a (vertical or horizontal) cooler with cold air jets.

### - BAGGING:

After cooling, the product is transported to bagging silos or carried bulk.

For the bagged product, raffia bags are used (laminated or not), measuring 60 x 100 cm and 65 x 100 cm with capacity for 25 kg each.

## Claims

1. **PROCESS TO OBTAIN EXTRUDED ANIMAL FEED INCLUDING FIBERS, characterized by** comprising the following steps:
- **STRAW TREATMENT** with the application of an antifungal (active principle: ammonium dipropionate or similar) in the bundling process, with a dosage of 0.5 liters/ton of straw, using a commercial product;
- **PRE-MILLING,** wherein the harvested straw is chopped in a rotating drum into 5-10 cm particles;
- **MILLING** of the sugar cane and/or corn straw in a chopping mill into particles which are lower than 6 mm;
- **DOSAGE** on scales, of corn and/or sorghum, 40-70% by weight; soy bran and/or sunflower bran and/or cotton bran, 1-4% by weight; and pre-chopped sugar cane straw and/or corn straw, 15-50% by weight;
- **WEIGHING** to control, by the pre-set weight, the quantity of each product;
- **MIXTURE** of the constituents corn and/or sorghum; soy bran and/or sunflower bran and/or cotton bran; sugar cane straw or corn straw, in a horizontal helical 3-stage mixer, into which urea for cattle-raising, 0.01-3% by weight, and potassium chloride for cattle-raising, limestone, calcium sulfate, dicalcium phosphate, potassium, monensin, virginiamycin, yeast, white salt, molasses, powdered milk and ready formulations under the ratio of 0.2-6% by weight, and the mixing process subsequently starts for a pre-set time of 1-5 minutes, depending on the formulation, wherein, in the case of animal feed for equines, urea and additives are not included in the mixture;
- **MILLING** in a hammer mill, with a 1.5-2.0 mm screen;
- **EXTRUSION,** determining grain size by means of the following 6 mm diameter, 8 mm diameter and 10 mm diameter matrixes;
- **DRYING** by using a steam (vertical or horizontal) drier; and
- **COOLING** in a (vertical or horizontal) cooler with cold air jets.

2. **PROCESS FOR OBTAINING EXTRUDED ANIMAL FEED INCLUDING FIBERS** of claim 1, **characterized by** the milling step being the last step before the extrusion process.

3. **PROCESS FOR OBTAINING EXTRUDED ANIMAL FEED INCLUDING FIBERS** of claim 1, **characterized by** the extruded product presenting humidity between 4% and 12% after the drying step.

4. **PROCESS FOR OBTAINING EXTRUDED ANIMAL FEED INCLUDING FIBERS** of claim 1, **characterized by** the cooling step being used just for packing the product.

5. **EXTRUDED ANIMAL FEED INCLUDING FIBERS FOR RUMINANTS, characterized by** being extruded and comprising: at least one source of fiber which may be sugar cane straw or corn straw, 15-50% by weight; corn and/or sorghum, 40-70% by weight; soy bran and/or sunflower bran and/or cotton bran, 1-4% by weight; urea for cattle raising, 0.01-3% by weight; and potassium chloride for cattle raising, limestone, calcium sulfate, dicalcium phosphate, potassium, monensin, virginiamycin, yeast, white salt, molasses, powdered milk and ready formulations, in the ratio of 0.2-6% by weight.

6. **EXTRUDED ANIMAL FEED INCLUDING FIBERS FOR EQUINES, characterized by** being extruded and comprising: at least one source of fiber which may be sugar cane straw or corn straw, 15-50% by weight; corn and/or sorghum, 40-70% by weight; and soy bran and/or sunflower bran and/or cotton bran, 1-4% by weight.
